# FASCICULE DE BREVET EUROPEEN

(11) **EP 3 513 234 B1**
(45) Date de publication et mention de la délivrance du brevet: **19.04.2023**
(21) Numéro de dépôt: 17764602.3
(22) Date de dépôt: 11.09.2017
(51) Int. Cl.: G02B 17/06, G03B 21/28, B60Q 1/50, F21S 41/155, F21S 41/153, F21S 43/31, F21S 41/36, F21S 41/675

(54) **SYSTÈME OPTIQUE POUR FAISCEAU LUMINEUX PIXÉLISÉ**
OPTISCHES SYSTEM FÜR EINEN GEPIXELTEN LICHTSTRAHL
OPTICAL SYSTEM FOR A PIXELIZED LIGHT BEAM

(30) Priorité: 15.09.2016 FR 1658644
(43) Date de publication de la demande: 24.07.2019
(73) Titulaire: Valeo Vision, 93012 Bobigny Cedex (FR)
(72) Inventeur: LEFAUDEUX, Nicolas, 93012 Bobigny Cedex (FR); THIN, Guillaume, 93012 Bobigny Cedex (FR); DE LAMBERTERIE, Antoine, 93012 Bobigny Cedex (FR); MBATA, Samira, 93012 Bobigny Cedex (FR); CANONNE, Thomas, 93012 Bobigny Cedex (FR); HOANG, Van-Thai, 93012 Bobigny Cedex (FR); AMIEL, François-Xavier, 93012 Bobigny Cedex (FR); DUBOIS, Vincent, 93012 Bobigny Cedex (FR)
(74) Mandataire: Valeo Visibility
(86) Numéro de dépôt international: PCT/EP2017/072741
(87) Numéro de publication internationale: WO 2018/050594

(56) Documents cités:
- WO-A1-2011/077988
- WO-A1-2016/050503
- DE-A1-102004 026 993
- US-A1- 2002 191 161
- US-A1- 2002 196 636
- US-A1- 2007 085 980
- US-A1- 2007 263 304
- US-A1- 2012 038 812
- US-A1- 2015 156 448

## Description

### DOMAINE DE L'INVENTION

L'invention se rapporte au domaine de la projection d'un faisceau lumineux pixélisé par un dispositif lumineux de véhicule automobile.

### ARRIERE-PLAN

La projection d'un faisceau lumineux par un dispositif lumineux de véhicule automobile permet classiquement d'éclairer la route avec un éclairage global et ainsi d'augmenter la visibilité en cas d'obscurité, par exemple de nuit. Cela permet une conduite sécurisée du véhicule.

Les développements récents dans le domaine de ces dispositifs lumineux permettent de produire un faisceau lumineux pixélisé pour réaliser cet éclairage. Le document US2002196636 A1 montre par exemple un projecteur de véhicule automobile avec un dispositif à micro-miroirs (DMD) permettant de projeter sur la route un faisceau pixelisé.
Avec un tel faisceau lumineux, le dispositif lumineux peut également réaliser des fonctions d'éclairage localisées, par exemple projeter un motif sur la scène. De telles fonctions sont connues du domaine de l'éclairage adaptatif. On connaît par exemple l'éclairage non éblouissant (« glare free » en anglais), consistant par exemple à assombrir une zone correspondant à un véhicule venant de face pour ne pas éblouir cet autre usager. On connaît également l'éclairage aidant à la conduite, consistant par exemple à sur-intensifier les marquages au sol ou panneaux de signalisation pour qu'ils soient plus visibles du conducteur et/ou à projeter sur la route une ou plusieurs informations visibles du conducteur.

Dans ce contexte, il existe un besoin pour améliorer la projection d'un faisceau lumineux pixélisé par un dispositif lumineux de véhicule automobile.

### RESUME DE L'INVENTION

On propose pour cela un projecteur de lumière de véhicule automobile comportant un dispositif lumineux avec une source lumineuse pixélisée ainsi qu'un procédé de projection de faisceau lumineux pixélisé utilisant un tel projecteur.

Le dispositif lumineux comporte une source lumineuse pixélisée et un système optique agencé pour projeter un faisceau lumineux pixélisé émis par la source lumineuse pixélisée. Le système optique comprend au moins trois miroirs. Le premier miroir est agencé pour collecter et réfléchir une majorité des rayons du faisceau lumineux pixélisé émis par la source lumineuse pixélisée. Le deuxième miroir est agencé pour réfléchir les rayons réfléchis par le premier miroir. Le troisième miroir est agencé pour réfléchir les rayons réfléchis par le deuxième miroir de sorte à corriger les aberrations de champ.

Un tel dispositif lumineux améliore la projection d'un faisceau lumineux pixélisé par un dispositif lumineux de véhicule automobile.

Le dispositif lumineux s'inscrit dans les technologies de projection d'un faisceau lumineux pixélisé. Un tel faisceau lumineux permet, grâce à son caractère pixélisé, de projeter un ou plusieurs motifs lorsque cela est souhaité.

L'architecture en au moins trois miroirs dont au moins l'un qui corrige les aberrations de champ du système optique le rapproche des télescopes anastigmatiques à trois miroirs (TMA, acronyme de l'anglais « Three-mirror anastigmat »). De même que le système optique de ces TMA, le système optique est achromatique ou au moins relativement peu chromatique (grâce à l'utilisation de miroirs). Egalement, le système optique peut éviter ou au moins réduire les aberrations de champ.

Pour ces raisons, comparé aux systèmes optiques de dispositif lumineux de véhicule automobile existants, le système optique peut permettre de produire des faisceaux lumineux pixélisés à haute résolution en générant un flou qui reste de l'ordre de grandeur du pixel. Cela distingue le système optique des systèmes optiques utilisés aujourd'hui dans le domaine automobile qui génèrent un flou de dimension souvent supérieure à celle du pixel pour des résolutions importantes. Le flou désigne l'étalement des points à projeter. Lorsqu'un système optique génère un flou, cela réduit l'efficacité et la résolution du dispositif lumineux. Cette perte de qualité est particulièrement gênante lorsque l'on souhaite projeter des motifs fins, avec des pixels de taille relativement faible. Le système optique proposé permet donc d'obtenir un dispositif lumineux de véhicule automobile efficace pour la projection d'un faisceau lumineux pixélisé haute résolution de bonne qualité.

A la différence des systèmes optiques de TMA dont la fonction est de recueillir des images astronomiques, le système optique est adapté non seulement pour projeter un faisceau lumineux pixélisé, mais aussi pour projeter un faisceau lumineux pixélisé émis par la source lumineuse pixélisée d'un dispositif lumineux de véhicule automobile. Ainsi, le champ de projection (i. e. l'angle maximal du faisceau lumineux projeté) du système optique est relativement large (pour pouvoir éclairer la route de manière adéquate) et les dimensions du système optique relativement faibles (pour pouvoir être intégré à un dispositif lumineux de véhicule automobile, devant lui-même être intégré à un projecteur de lumière de véhicule automobile).

Le procédé de projection de faisceau lumineux pixélisé par le dispositif lumineux comprend la fourniture d'une consigne de distribution d'éclairements à réaliser par la projection de faisceau lumineux pixélisé. Le procédé comprend également la détermination d'une distribution d'intensités lumineuses sur la source lumineuse pixélisée correspondant à la consigne et compensant une distorsion de la distribution d'éclairements par le système optique. Le procédé comprend également l'émission par la source lumineuse pixélisée d'un faisceau lumineux pixélisé par la distribution d'intensités lumineuses déterminée. Et le procédé comprend la projection par le système optique du faisceau lumineux pixélisé émis par la source lumineuse.

On propose également un programme d'ordinateur comprenant des instructions de code de programme pour l'exécution du procédé. Le procédé s'exécute lorsque ledit programme est exécuté par une unité de contrôle de projection d'un faisceau lumineux pixélisé par un dispositif lumineux de véhicule automobile tel que ci-dessus, le dispositif lumineux comportant également l'unité de contrôle couplée à la source lumineuse pixélisée.

Selon différents modes de réalisation, toute combinaison d'au moins l'une des caractéristiques suivantes peut être implémentée :
- le premier miroir est agencé pour collecter et réfléchir directement une majorité des rayons du faisceau lumineux pixélisé émis par la source lumineuse pixélisée; en d'autres termes, le premier miroir reçoit directement les rayons du faisceau lumineux pixélisé émis par la source lumineuse pixélisée et les réfléchit, sans qu'un élément optique intermédiaire ne soit intercalé entre la source lumineuse pixélisée et le premier miroir;
- le premier miroir est agencé pour collecter et réfléchir indirectement une majorité des rayons du faisceau lumineux pixélisé émis par la source lumineuse pixélisée, c'est-à-dire qu'un élément optique est intercalé entre la source lumineuse pixélisée et le premier miroir, sans que cela change le rôle de collection du premier miroir ;
- le deuxième miroir est agencé pour réfléchir directement ou indirectement les rayons réfléchis par le premier miroir ;
- le troisième miroir est agencé pour réfléchir directement ou indirectement les rayons réfléchis par le deuxième miroir;
- le troisième miroir est également agencé pour collimater et projeter le faisceau lumineux pixélisé;
- le dispositif lumineux comporte en outre un moyen optique agencé pour recevoir les rayons réfléchis par le troisième miroir et pour collimater et projeter le faisceau lumineux pixélisé;
- le deuxième miroir est agencé sensiblement en position pupille;
- au moins un des miroirs est hors axe;
- au moins un des miroirs est de forme libre;
- au moins deux des miroirs ou tous les miroirs sont de forme libre ;
- le système optique présente une architecture creuse ;
- le système optique présente une architecture monolithique ;
- le système optique forme une pièce pleine unique, par exemple réalisée en un bloc de matière transparente ;
- le système optique comprend une face d'entrée et une face de sortie ;
- le système optique comporte en outre au moins trois autres faces formant les premier, deuxième et troisième miroirs ;
- la face de sortie assure ou participe à la collimation;
- la face d'entrée et/ou la face de sortie est agencée pour corriger les aberrations de champ ;
- le système optique présente l'une au moins des caractéristiques suivantes (par exemple toutes les caractéristiques suivantes) : une hauteur de champ de projection supérieure à 10°, une largeur de champ de projection supérieure à 40°, un pouvoir de collection (f/D) inférieur à 3, un pouvoir de résolution plus faible que 0,5° (i.e. valeur d'angle supérieure à 0,5°), au moins dans une zone au centre du champ de projection, et/ou une plus grande dimension inférieure à 300 millimètres; et/ou
- le dispositif lumineux comporte en outre une unité de contrôle comportant un processeur associé à une mémoire ayant enregistré un programme d'ordinateur comprenant des instructions de code de programme pour l'exécution d'un procédé comprenant : la fourniture d'une consigne de distribution d'éclairements à réaliser par la projection de faisceau lumineux pixélisé ; la détermination d'une distribution d'intensités lumineuses sur la source lumineuse pixélisée correspondant à la consigne et compensant une distorsion de la distribution d'éclairements par le système optique ; l'émission par la source lumineuse pixélisée d'un faisceau lumineux pixélisé par la distribution d'intensités lumineuses déterminée ; et la projection par le système optique du faisceau lumineux pixélisé émis par la source lumineuse.

### BREVE DESCRIPTION DES FIGURES

Différents modes de réalisation de l'invention vont maintenant être décrits, à titre d'exemples nullement limitatifs, en se référant aux dessins annexés dans lesquels :
- Les FIGs. 1-2 illustrent un système optique de TMA de l'art antérieur ;
- Les FIGs. 3-5 montrent des exemples du système optique ;
- La FIG. 6 montre le résultat de simulations ;
- La FIG. 7 montre un diagramme illustrant un exemple du procédé ;
- La FIG. 8 illustre le procédé ;
- La FIG. 9 montre un exemple schématique de module lumineux comprenant une source lumineuse pixélisée ; et
- La FIG. 10 montre un exemple schématique de projection d'un faisceau lumineux pixélisé par un véhicule.

### DESCRIPTION DETAILLEE

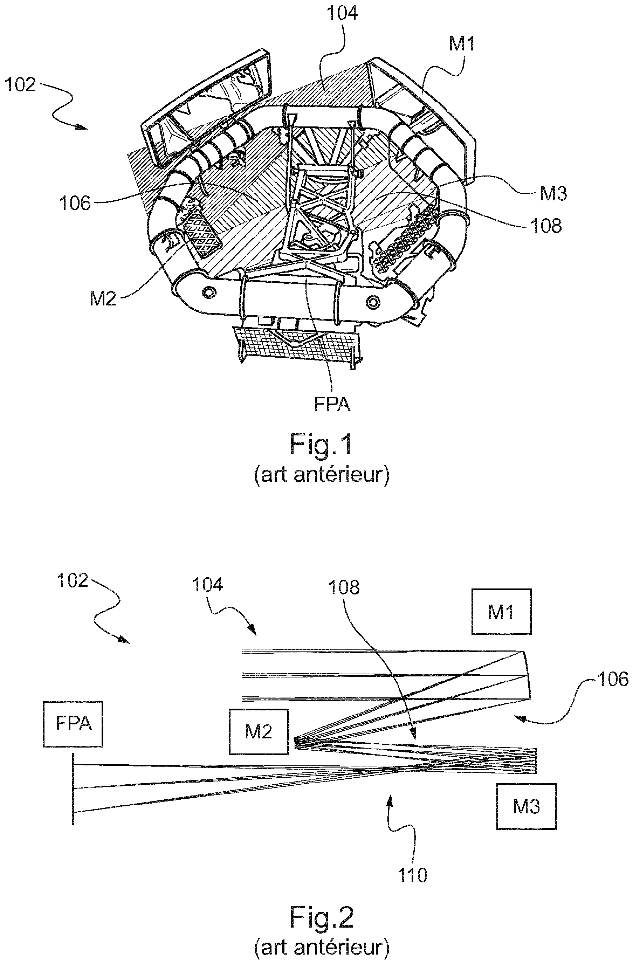

La FIG. 1 montre un système optique 102 de télescope de type TMA de l'art antérieur. La FIG. 2 illustre schématiquement le fonctionnement du système optique 102.

Selon ce fonctionnement, un premier miroir M1 est agencé pour collecter et réfléchir des rayons 104 du faisceau lumineux émis par un objet céleste et pour corriger les aberrations de champ. Les rayons 104 sont parallèles du fait de la distance de l'objet céleste. Un deuxième miroir M2 est agencé pour réfléchir les rayons 106 réfléchis par le premier miroir M1. Un troisième miroir M3 est agencé pour recevoir les rayons 108 réfléchis par le deuxième miroir M2 et pour projeter les rayons 110 résultant sur une matrice plan focal FPA (acronyme de l'anglais « Focal Plane Array ») qui permet de visualiser et/ou enregistrer l'image. Le champ de vision du système optique 102 est rectangulaire et relativement étroit et le dimensionnement du système optique 102 est relativement élevé. Mais grâce à à son architecture (notamment par la correction d'aberrations de champ par le premier miroir M1), le pouvoir de résolution du système optique 102 est particulièrement grand. Ainsi, le système optique 102 convient bien pour observer des objets célestes avec un télescope. Le document US 2012038812 A décrit un exemple d'un système optique ayant ce fonctionnement.

Le système optique proposé présente des similitudes d'architecture avec le système optique 102. En particulier, il forme lui aussi un système à plusieurs miroirs qui peut être anastigmatique (au moins dans une certaine mesure) avec un agencement et une configuration de miroirs (forme et propriétés surfaciques) adéquats et bien connus du domaine des TMA. Les miroirs sont des surfaces réfléchissantes, également appelées « réflecteurs ». Ainsi, le système optique permet d'obtenir un très grand pouvoir de résolution.

Le pouvoir de résolution pour un système optique de dispositif lumineux de véhicule automobile qui projette un faisceau lumineux pixélisé désigne l'angle minimal qui doit séparer deux points contigus pour qu'ils soient discernables. Ainsi, le pouvoir de résolution d'un système optique correspond à la plus fine résolution que l'on peut utiliser pour incruster des motifs détaillés dans un faisceau lumineux pixélisé que l'on souhaite discernables. En deçà du pouvoir de résolution, le motif détaillé n'est pas discernable. Ainsi, avec un système optique présentant un fort pouvoir de résolution, un dispositif lumineux de véhicule projetant un faisceau lumineux pixélisé émis par une source lumineuse pixélisé peut tirer pleinement profit de toute la finesse de résolution fournie par la source lumineuse pixélisé Le système optique proposé permet donc de tirer profit d'une source lumineuse pixélisée haute résolution, par exemple qui comprend plus de 1000 pixels ou plus de 10.000 pixels.

A la différence du système optique 102, le système optique proposé ne comprend pas de FPA. Dans l'agencement global du dispositif lumineux, le FPA est remplacé par une source lumineuse pixélisée qui émet un faisceau lumineux pixélisé (e. g. non parallèle). Dès lors, le système optique proposé fonctionne à l'inverse du système optique de l'art antérieur. En référence à la FIG. 2, le premier miroir rencontré par les rayons du faisceau lumineux pixélisé correspond à M3 dans le système optique 102. Ce premier miroir collecte et réfléchit ces rayons vers un deuxième miroir qui correspond M2. Le deuxième miroir réfléchit ensuite les rayons vers un troisième miroir qui correspond à M1 et qui corrige les aberrations de champ.

Différents exemples de caractéristiques du système optique proposé sont maintenant discutées.

Le troisième miroir peut être agencé pour faire une collimation et projeter le faisceau lumineux pixélisé, par exemple sur la route. Alternativement, le dispositif lumineux peut comporter en outre un moyen optique agencé pour recevoir les rayons réfléchis par le troisième miroir et pour collimater et projeter le faisceau lumineux pixélisé. Le moyen optique peut par exemple recevoir directement les rayons issus du troisième miroir (sans élément intermédiaire). Dans ces cas, le système optique peut comprendre exactement trois et pas plus de trois miroirs, comme pour les systèmes optiques des TMA. Sa fabrication est donc relativement simple. Alternativement, le système optique peut comprendre un ou plusieurs autres miroirs, par exemple un quatrième ou un cinquième miroir.

Le premier miroir peut être agencé pour collecter une majorité des rayons du faisceau lumineux pixélisé émis par la source lumineuse pixélisée. Cela permet une grande efficacité du dispositif lumineux. Le faisceau lumineux pixélisé émis par la source lumineuse pixélisée peut avoir la forme d'un cône. Le premier miroir peut être agencé de manière adaptée. Le premier miroir peut être concave.

Le premier miroir peut produire la majorité de la puissance optique du système optique, par exemple l'essentiel de la puissance optique. Le premier miroir peut être agencé pour participer à la correction des aberrations de champ (avec le troisième miroir). Le premier miroir peut également participer à la correction des aberrations sphériques .

La position et la forme du deuxième miroir peut être configurée pour la réception de tous les rayons émis par la source lumineuse pixélisée qui sont réfléchis par le premier miroir et pour rediriger ces rayons vers le troisième miroir, quel que soit leur angle d'émission. Cela permet d'optimiser l'efficacité du dispositif lumineux.

Le deuxième miroir peut être agencé sensiblement en position pupille. La position pupille correspond au télécentrisme des rayons lumineux au niveau de la source lumineuse pixellisée. Cela permet d'optimiser l'efficacité du dispositif lumineux.

Au moins un miroir peut être hors axe. Par exemple, tous les miroirs peuvent être hors axe. L'utilisation de miroirs hors axe permet d'éviter d'occulter une partie des rayons par le miroir de repli et d'améliorer la transmission du système.

Au moins un des miroirs peut être de forme libre. Par exemple, tous les miroirs sont de forme libre. Un miroir de forme libre est un miroir ayant un profil de type surface-libre, c'est-à-dire sans axe de symétrie de révolution. Cela le distingue des miroirs de type sphériques mais également de ceux dits de type asphérique utilisés dans les TMA classiques, c'est-à-dire différents de la forme d'une sphère mais constituant au moins une portion d'une forme à symétrie de révolution. Pour un système à fort pouvoir de collection et large champ, l'utilisation de surfaces libres permet d'obtenir les meilleures performances en termes de pouvoir de résolution, champ de projection et compacité du système.

Le véhicule automobile peut être tout type de véhicule terrestre, par exemple une automobile (voiture), une motocyclette, ou un camion. Le véhicule peut être équipé d'un ou plusieurs projecteur(s) avant et/ou d'un ou plusieurs projecteur(s) arrière. L'un ou plusieurs des projecteurs avant et/ou arrière peuvent comprendre chacun un ou plusieurs dispositif(s) lumineux configuré(s) chacun pour projeter un faisceau lumineux pixélisé. La projection d'un faisceau lumineux pixélisé trouve un intérêt particulier lorsqu'elle est réalisée par un dispositif lumineux de projecteur avant.

Pour un dispositif lumineux donné, la projection peut se faire sur une scène. La scène ou « scène de route » est l'environnement du véhicule susceptible d'être éclairé par le dispositif lumineux.

Un faisceau lumineux pixélisé est de manière connue un faisceau lumineux subdivisé en sous-faisceaux lumineux élémentaires appelés « pixels ». La subdivision peut être quelconque, par exemple former une grille présentant une dimension en azimut et une dimension en profondeur (ou éloignement) par rapport à la position du véhicule. Chaque pixel est contrôlable individuellement par le dispositif lumineux dans une mesure permettant de projeter au moins un motif sur la scène. Un motif est une zone localisée de la scène pour laquelle la valeur de l'intensité lumineuse s'écarte de la valeur nominale et créée un contraste localisé dans la scène. Un motif peut être distinguable on non distinguable à l'œil nu.

Chaque pixel du faisceau lumineux pixélisé se projette sur une zone correspondante de la scène, également appelée « pixel ». Le dispositif lumineux peut contrôler individuellement l'intensité lumineuse de la source de chaque pixel du faisceau lumineux pixélisé pour ainsi contrôler individuellement l'éclairement de chaque pixel de la scène. Le dispositif lumineux peut diviser la scène en plus de 10 pixels, plus de 50 pixels, ou, pour une projection implémentant des fonctions avancées, plus de 500 pixels (par exemple de l'ordre de 1000 pixels ou plus de 1000 pixels). Le faisceau lumineux pixélisé peut par exemple assombrir un ou plusieurs groupes d'un ou plusieurs pixels, et/ou sur-illuminer un ou plusieurs groupes d'un ou plusieurs pixels par rapport à une valeur d'intensité lumineuse en cours, par exemple la valeur nominale. Un assombrissement de pixel est une diminution à un instant donné de l'éclairement dans le pixel. Il est donc à noter que l'assombrissement d'un pixel n'implique pas nécessairement l'arrêt de l'éclairage du pixel. Une sur-illumination de pixel est une augmentation à un instant donné de l'éclairement dans le pixel. Le contraste du motif par rapport à son pourtour peut donc être positif ou négatif. La résolution d'un motif peut être de l'ordre du pixel. La taille du motif peut être inférieure à 25% ou 10% de l'ensemble des pixels de la scène.

La taille du motif peut être égale ou supérieure à un pixel. Pour un motif donné projeté à un instant donné, un ou plusieurs pixels de la scène - ou de manière équivalente du faisceau lumineux - correspondent au motif. Une distribution d'une ou plusieurs intensité(s) lumineuse(s) respective(s) au motif est ainsi associée à chaque pixel et forme le motif. Un procédé peut donc projeter le motif en une zone de la scène en fournissant au dispositif lumineux une consigne d'intensité lumineuse qui correspond au motif, pour chaque pixel concerné de la scène. La consigne d'intensité lumineuse peut être toute structure de données relative à l'intensité lumineuse, par exemple une valeur d'intensité lumineuse à appliquer pour le centre du pixel, une distribution spatiale et/ou temporelle de valeurs à appliquer pour un même pixel, et/ou des données indirectement liées à l'intensité lumineuse et pouvant être traduites en intensité lumineuse (comme par exemple des données relatives à l'éclairement dans le pixel). Lorsque la consigne est respectée pour tous les pixels correspondant au motif, le motif est pleinement projeté sur la scène. Plusieurs motifs peuvent être projetés simultanément, avec ou sans chevauchement spatial. Le cas d'un chevauchement spatial peut être géré de toute manière. Par exemple, un motif peut avoir la priorité sur un autre. Alternativement, le dispositif lumineux peut être configuré pour trouver un compromis dans les éclairements à appliquer sur un pixel inclus dans le chevauchement.

La projection du motif peut améliorer une situation de conduite. Une situation de conduite peut correspondre à un ensemble de paramètres de conduite, par exemple incluant des paramètres environnementaux et/ou architecturaux relatifs à la route, des paramètres systèmes du véhicule et/ou d'autres véhicules, et/ou des paramètres relatifs à l'état de la route. L'amélioration peut consister en une projection du motif augmentant le confort et/ou aidant le conducteur du véhicule projetant le motif et/ou d'autres usagers (par exemple un autre conducteur d'un ou plusieurs autre(s) véhicule(s) et/ou un ou plusieurs piétons). La projection du motif peut accomplir cette amélioration en réalisant l'une ou plusieurs des fonctions suivantes : une fonction de projection d'information créée à l'attention du conducteur et/ou d'autres usagers, une fonction de mise en évidence ou de surbrillance d'objet(s) dans la scène, et/ou une fonction de non éblouissement de toute personne (par exemple d'un ou plusieurs autres usagers). Un tel motif permet de faciliter la conduite et/ou d'augmenter la sécurité, du point de vue du véhicule émetteur et/ou des autres véhicules en circulation à l'instant où le motif est projeté.

Un motif peut avoir pour fonction d'éviter l'éblouissement d'un autre usager ou du conducteur par assombrissement d'une zone de la scène correspondant à cet autre usager et/ou à un panneau réfléchissant. Grâce à cela, le dispositif lumineux peut par exemple fonctionner de manière continue en feu de route, le dispositif lumineux assurant l'assombrissement dès qu'un autre véhicule vient de face. Cela assure un confort de conduite et une visibilité élevés et cela augmente donc la sécurité.

Un motif peut former une image projetée au sol, par exemple sur la route. Une image est un motif qui est visible, c'est-à-dire distinguable, par exemple par le conducteur et/ou d'autres usagers. L'image peut avoir l'une ou plusieurs des fonctions suivantes : sur-intensifier des marquages du sol (par exemple des lignes et/ou flèches, par exemple par sur-illumination de sorte à permettre d'augmenter leur contraste et donc leur visibilité) ; souligner un bas-côté de la route empruntée par le véhicule ; créer une représentation bornant la route (par exemple lorsque qu'un marquage est absent) ; créer un marquage correspondant à la dimension du véhicule (ce qui permet d'identifier la trajectoire du véhicule - en intégrant éventuellement l'angle volant- formant ainsi un équivalent à l'avant des caméras de recul) ; et/ou afficher une ou plusieurs informations de tout type offrant une assistance pour le conducteur (par exemple concernant la sécurité, les dangers, ou encore des données liées à la conduite, telles qu'une vitesse ou une direction).

Le motif peut correspondre par exemple à une zone localisée plus éclairée que le reste de la scène autour, et/ou à une zone localisée moins éclairée que le reste de la scène autour ou pas éclairée du tout. Dans le cas où la zone localisée est sur la route même, le motif peut correspondre à une zone localisée éclairée. Cela permet au conducteur de continuer à voir la route même dans la zone et maintient ainsi la sécurité de la conduite. Dans le cas où le motif est à l'attention du conducteur du véhicule, le motif peut correspondre à une zone localisée plus éclairée que le reste de la scène. Cela permet une plus grande visibilité pour le conducteur. Egalement, un contour du motif peut être assombri. Cela augmente encore le contraste et donc la visibilité du motif. Le motif peut par exemple former une image projetée sur la route à l'attention du conducteur du véhicule. Dans ce cas, un contraste positif du motif par rapport à son pourtour permet une visualisation particulièrement bonne. Dans un autre exemple, le motif peut correspondre à un autre véhicule (automobile ou non), par exemple venant de face. Dans ce cas, le motif peut correspondre à l'emplacement occupé par cet autre véhicule dans la scène. Un assombrissement impliquant un contraste négatif du motif par rapport à son pourtour permet de ne pas éblouir cet autre usager et ainsi de sécuriser la route. De manière similaire, le motif peut correspondre à l'emplacement occupé par un panneau ou autre objet réfléchissant. Un assombrissement de ce panneau permet d'éviter les réflexions et donc l'éblouissement du conducteur et/ou d'autres usagers.

Un faisceau lumineux pixélisé peut être projeté par un dispositif lumineux comportant une source lumineuse pixélisée. La source lumineuse peut être apte à coopérer avec un système optique (intégré au dispositif ou non) agencé pour projeter sur la route un faisceau lumineux pixélisé émis par la source lumineuse pixélisée. Le procédé peut comprendre la projection du faisceau lumineux pixélisé avec un tel dispositif lumineux. La même source lumineuse pixélisée peut émettre l'éclairage global et l'image. Une source lumineuse pixélisée est une source lumineuse divisée en plusieurs unités de sources lumineuses contrôlables individuellement. Chaque pixel émis par la source lumineuse pixélisée, et donc chaque unité de source lumineuse, peut correspondre à un pixel du faisceau lumineux pixélisé projeté. Ainsi, l'intensité lumineuse de chaque pixel de la source lumineuse pixélisée et donc l'éclairement de chaque pixel de la scène peuvent être contrôlés individuellement. La source lumineuse pixélisée peut comporter plus de 1000 pixels. Le dispositif lumineux peut ainsi projeter des motifs à haute résolution.

La source lumineuse pixélisée peut comprendre une matrice d'unités de sources lumineuses. La matrice peut comprendre une multitude de pixels dans un plan. Dans le cas d'une source lumineuse comprenant une matrice de pixels et coopérant avec un système optique, le système optique peut présenter une zone de focalisation confondue avec le plan de la matrice de pixels, c'est-à-dire confondu avec la source lumineuse pixélisée.

La source lumineuse pixélisée peut être de type DMD (acronyme anglais pour « Digital Mirror Device ») où la modulation en rotation de micros-miroirs permet d'obtenir une intensité lumineuse souhaitée dans une direction donnée. La source lumineuse pixélisée peut être de type LCD (acronyme anglais pour « Liquid Crystal Displays ») comprenant une source de lumière surfacique devant laquelle des cristaux liquide sont placés. Le mouvement des cristaux liquide peut autoriser ou interdire le passage de lumière et forme ainsi faisceau lumineux pixélisé. La source lumineuse pixélisée peut être de type laser envoyant un faisceau de rayons de lumière vers un système de balayage qui le répartit sur la surface d'un dispositif de conversion de longueur d'onde, tel qu'une plaque comportant un luminophore.

La source lumineuse pixélisée peut être une source électroluminescente. Une source électroluminescente est une source de lumière à état solide (de l'anglais « solid-state lighting ») qui comprend au moins un élément électroluminescent. Des exemples d'élément électroluminescent incluent la diode électroluminescente ou LED (acronyme anglais pour « Light Emitting Diode »), la diode électroluminescente organique ou OLED (acronyme anglais pour « Organic Light-Emitting Diode »), ou la une diode électroluminescente polymérique ou PLED (acronyme anglais pour « Polymer Light-Emitting Diode »). La source lumineuse pixélisée peut être une source lumineuse à semi-conducteur. Chaque élément électroluminescent ou groupe d'éléments électroluminescents peut former un pixel et peut émettre de la lumière lorsque son ou leur matériau est alimenté en électricité. Les éléments électroluminescents peuvent être chacun semi-conducteur, c'est-à-dire qu'ils comportent chacun au moins un matériau semi-conducteur. Les éléments électroluminescents peuvent être majoritairement en matériau semi-conducteur. On peut donc parler de pixel lumineux lorsqu'un élément électroluminescent ou groupe d'éléments électroluminescents formant un pixel de la source lumineuse pixélisée émet de la lumière. Les éléments électroluminescents peuvent être situés sur un même substrat, par exemple déposés sur le substrat ou obtenus par croissance et s'étendre à partir du substrat. Le substrat peut être majoritairement en matériau semi-conducteur. Le substrat peut comporter un ou plusieurs autres matériaux, par exemple non semi-conducteurs.

La source lumineuse pixélisée peut être électroluminescente à semi-conducteur monolithique. La source peut par exemple être une matrice monolithique de pixels. La source lumineuse peut être par exemple une matrice monolithique de LEDs (traduction du terme anglais « monolithic array of LEDs »). Une matrice monolithique comprend au moins 50 éléments électroluminescents situés sur un même substrat (par exemple sur une même face du substrat), par exemple plus de 100, 1000 ou des milliers. Le substrat peut comporter du saphir et/ou du silicium. Les pixels de la matrice monolithique peuvent être séparés les uns des autres par des lignes (nommées « lanes » en anglais) ou des rues (nommées « streets » en anglais). La matrice monolithique peut donc former une grille de pixels. Une source monolithique est une source ayant une forte densité de pixels. La densité de pixels peut être supérieure ou égale à 400 pixels par centimètre carré (cm²). En d'autres termes, la distance entre le centre d'un premier pixel et le centre d'un deuxième pixel voisin du premier peut être égale ou inférieure à 500 micromètres (µm). Cette distance est également appelée « pixel pitch » en anglais.

Dans une première configuration, correspondant notamment au cas d'une matrice monolithique de LEDs, chacun des éléments électroluminescent de la matrice peut être indépendant électriquement des autres et émet ou non de la lumière indépendamment des autres éléments de la matrice. Chaque élément électroluminescent peut ainsi former un pixel. Une telle source lumineuse permet d'atteindre une haute résolution relativement simplement.

Dans une deuxième configuration, les éléments électroluminescents présentent une forme générale de « bâtonnets », par exemple de dimensions submillimétriques. Les bâtonnets peuvent chacun s'étendre orthogonalement au substrat, présenter une forme générale cylindrique, notamment de section polygonale, présenter un diamètre compris entre 0.5 µm et 2.0 µm, préférentiellement 1 µm, présenter une hauteur comprise entre 1 µm et 10 µm préférentiellement 8 µm, et/ou présenter une luminance d'au moins 60 Cd/mm², de préférence d'au moins 80 Cd/mm². La distance entre deux bâtonnets immédiatement adjacents peut être comprise entre 3 µm et 10 µm et/ou constante ou variable. Les bâtonnets peuvent être agencés pour émettre des rayons lumineux le long du bâtonnet (c'est-à-dire le long d'une direction perpendiculaire à un plan majoritaire d'extension du substrat) et en bout de celui-ci. Le matériau semi-conducteur peut comporter du silicium. Les éléments électroluminescents sont répartis dans différentes zones d'émission lumineuse activables sélectivement, chaque pixel étant ainsi formé par une zone activable sélectivement. Une telle source lumineuse pixélisée présente des avantages d'encombrement et de durée de vie, et d'atteindre de très hautes résolutions.

La source lumineuse pixélisée peut être couplée à une unité de contrôle de l'émission lumineuse de la source lumineuse pixélisée. L'unité de contrôle peut ainsi commander (piloter) la génération (par exemple l'émission) et/ou la projection d'un faisceau lumineux pixélisé par le dispositif lumineux. L'unité de contrôle peut être intégrée au dispositif lumineux. L'unité de contrôle peut être montée sur la source lumineuse, l'ensemble formant ainsi un module lumineux. L'unité de contrôle peut comporter un processeur (ou encore CPU acronyme de l'anglais « Central Processing Unit », littéralement « unité centrale de traitement ») qui est couplé avec une mémoire sur laquelle est stockée un programme d'ordinateur qui comprend des instructions permettant au processeur de réaliser des étapes générant des signaux permettant le contrôle de la source lumineuse de manière à exécuter le procédé. L'unité de contrôle peut ainsi par exemple contrôler individuellement l'émission lumineuse de chaque pixel d'une source lumineuse pixélisée.

L'unité de contrôle peut former un dispositif électronique apte à commander des éléments électroluminescents. L'unité de contrôle peut être un circuit intégré. Un circuit intégré, encore appelé puce électronique, est un composant électronique reproduisant une ou plusieurs fonctions électroniques et pouvant intégrer plusieurs types de composants électroniques de base, par exemple dans un volume réduit (i.e. sur une petite plaque). Cela rend le circuit facile à mettre en oeuvre. Le circuit intégré peut être par exemple un ASIC ou un ASSP. Un ASIC (acronyme de l'anglais « Application-Specific Integrated Circuit ») est un circuit intégré développé pour au moins une application spécifique (c'est-à-dire pour un client). Un ASIC est donc un circuit intégré (micro-électronique) spécialisé. En général, il regroupe un grand nombre de fonctionnalités uniques ou sur mesure. Un ASSP (acronyme de l'anglais « Application Spécifie Standard Product ») est un circuit électronique intégré (micro-électronique) regroupant un grand nombre de fonctionnalités pour satisfaire à une application généralement standardisée. Un ASIC est conçu pour un besoin plus particulier (spécifique) qu'un ASSP. L'alimentation en électricité de la source électroluminescente, et donc des éléments électroluminescents est réalisée via le dispositif électronique, lui-même alimenté en électricité à l'aide par exemple d'au moins connecteur le reliant à une source d'électricité. Le dispositif électronique alimente alors les éléments électroluminescents en électricité. Le dispositif électronique est ainsi apte à commander les éléments électroluminescents.

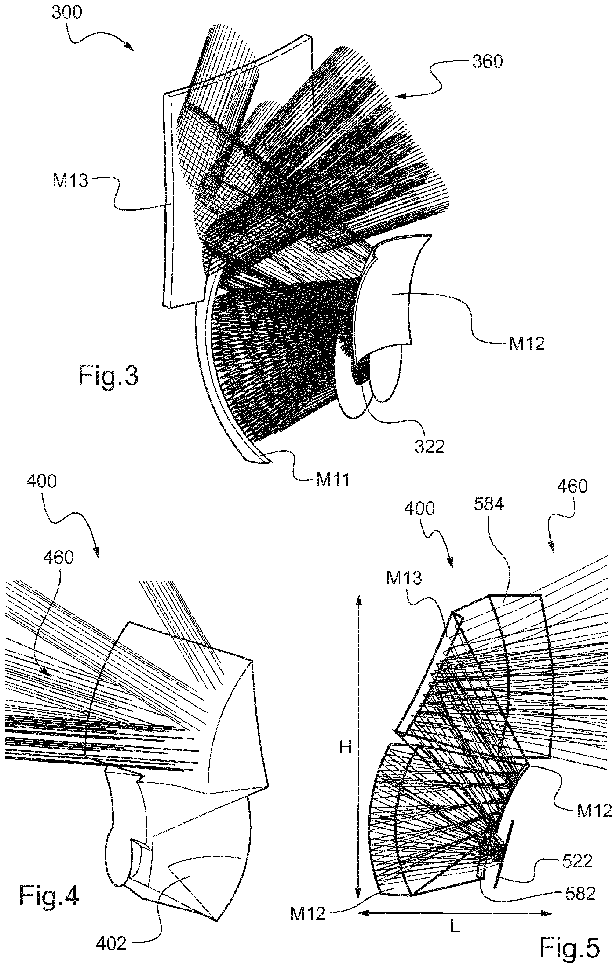

Différents exemples du système optique sont maintenant discutés en référence aux FIGs. 3-5.

Les systèmes optiques 300,400 des exemples comprennent chacun un premier miroir M11 agencé pour collecter et réfléchir des rayons du faisceau lumineux pixélisé émis par la source lumineuse pixélisée, un deuxième miroir M12 agencé pour réfléchir les rayons réfléchis par le premier miroir, et un troisième miroir M13 agencé pour recevoir les rayons réfléchis par le deuxième miroir et pour réfléchir ces rayons de sorte à corriger les aberrations de champ. Dans ces exemples, le deuxième miroir M12 est agencé sensiblement en position pupille et réceptionne tous les rayons réfléchis par le premier miroir M11. Le premier miroir M11, le deuxième miroir M12 et le troisième miroir M13 sont de forme libre. Le premier miroir est concave M11. Dans ces exemples, le système optique ne comprennent pas d'autre miroir. Les discussions qui suivent s'appliquent toutefois également dans d'autres cas, notamment dans le cas où le système optique comprend un ou plusieurs autre(s) miroir(s).

Dans une première configuration représentée en FIG. 3, le système optique 300 présente une architecture creuse. Dans l'exemple, M11, M12 et M13 sont tous séparés. On pourrait prévoir en variante une unique structure creuse. Chaque groupe ou chaque miroir peut être maintenu dans le dispositif lumineux indépendamment des autres, par des moyens non illustrés sur la figure. Une telle architecture creuse permet d'avoir un système optique 300 léger. M11 est agencé pour collecter et réfléchir des rayons du faisceau lumineux pixélisé émis par la source lumineuse pixélisée 322. La structure du système optique étant ouverte, aucun élément obturateur ne gêne cette collecte. M12 agencé pour réfléchir les rayons réfléchis par M11 et M13 est agencé pour recevoir ces rayons, faire une collimation et projeter le faisceau lumineux pixélisé 360. Le troisième miroir M13 est agencé pour faire une collimation du faisceau lumineux pixélisé 360 et le projeter sur la route.

Dans une deuxième configuration représentée en perspective en FIG. 4 et le long d'un plan de symétrie vertical en FIG. 5, le système optique 400 présente au contraire une architecture monolithique. Les miroirs M11, M12 et M13 forment une pièce unique 402, c'est-à-dire monobloc. Cela permet d'éviter les déréglages des miroirs entre eux, et ainsi d'avoir un réglage initial (par exemple, un réglage usine) qui reste stable.

La pièce unique 402 peut être réalisée dans un matériau transparent muni de faces de réflexion aluminées formant un, plusieurs ou tous les miroirs M11, M12 et M13. Cela permet une fabrication simple, car ne devant pas tenir compte de l'agencement de parois de 402 entravant la circulation des rayons lumineux . La fabrication peut n'avoir comme contrainte de fabrication que l'agencement des faces de réflexion aluminées formant les miroirs M11, M12 et M13.

Dans cette deuxième configuration, le système optique 400 comprend une face d'entrée 582 et une face de sortie 584. La faisceau lumineux pixélisé émis par la source lumineuse pixélisée 522 entre par la face d'entrée 582, suit les réflexions des miroirs M11, M12, et M13 et la face de sortie 584 fait une collimation des rayons et projette le faisceau lumineux pixélisé sur la route. La face d'entrée 582 et la face de sortie 584 peuvent l'une quelconque des deux ou les deux être agencée(s) pour corriger les aberrations de champ. Cela améliore la performance globale.

On peut concevoir un système optique adapté à un dispositif lumineux de véhicule automobile selon l'un quelconque des exemples et/ou l'une quelconque des configurations décrites ci-dessus, par exemple en se basant sur les conceptions bien connues du domaine des TMA (par exemple tel que décrit dans le document US 2012038812 A précité), en se donnant comme contraintes les spécifications suivantes du système optique : une hauteur de champ de projection (i.e. angle maximal du faisceau lumineux pixélisé projeté dans un plan vertical) supérieure à 10° (par exemple +/- 5°, le symbole « +/- » étant respectif à la direction centrale), une largeur de champ de projection (i.e. angle maximal du faisceau lumineux pixélisé projeté dans un plan horizontal) supérieure à 40° (par exemple +/- 20°), un pouvoir de collection (c'est-à-dire un f/D) inférieur à 3, un pouvoir de résolution plus faible que 0,5° (au moins dans une zone au centre du champ de projection), et une plus grande dimension (i.e. une dimension de taille) du système optique inférieure à 300 millimètres. La plus grande dimension peut être la longueur du plus petit parallélépipède théorique contenant le système optique (par exemple la hauteur H pour le système optique 400 de la FIG. 5).

Cela permet d'obtenir un système optique qui a une dimension adéquate pour pouvoir être intégré à un dispositif lumineux de véhicule automobile et qui assure une bonne qualité de projection d'un faisceau lumineux pixélisé émis par une source lumineuse pixélisée du dispositif lumineux, même quand la source pixélisée est haute résolution et que le faisceau lumineux contient des détails utilisant pleinement la résolution maximale. En effet, un pouvoir de résolution plus faible que 0,5° et un f/D inférieur à 3 sont des spécifications relativement élevées par rapport aux systèmes optiques des TMA mais suffisamment bonnes pour l'application visée. Le fait que les spécifications ne soient pas plus contraignantes permet de respecter les contraintes de dimension et de champ de projection de l'application visée.

On peut encore améliorer la qualité en ajoutant l'une ou plusieurs des contraintes suivantes : une hauteur de champ de projection de l'ordre de ou supérieure à +/- 15°, une largeur de champ de projection de l'ordre de ou supérieure à +/-40°, un pouvoir de résolution supérieur à 0.15° pour l'ensemble du champ de projection, un pouvoir de résolution supérieur ou de l'ordre de 0.08° dans une zone au centre du champ de projection, un f/D de l'ordre de 0,8, et/ou des dimensions de l'ordre de 100 x 100 x 250 millimètres.

A titre de comparaison, le système optique 102 du TMA de la FIG. 1 peut présenter : un champ de vision de +/- 0,85° en largeur et de +/- 0,3° en hauteur, un pouvoir de résolution de l'ordre de 0,00005°, un f/D de l'ordre de 24, et pour respecter ces contraintes une plus grande dimension de plusieurs mètres. Par conséquent, ce dimensionnement de TMA est inadapté à la projection de faisceau lumineux pixélisé par un dispositif lumineux dans le contexte automobile.

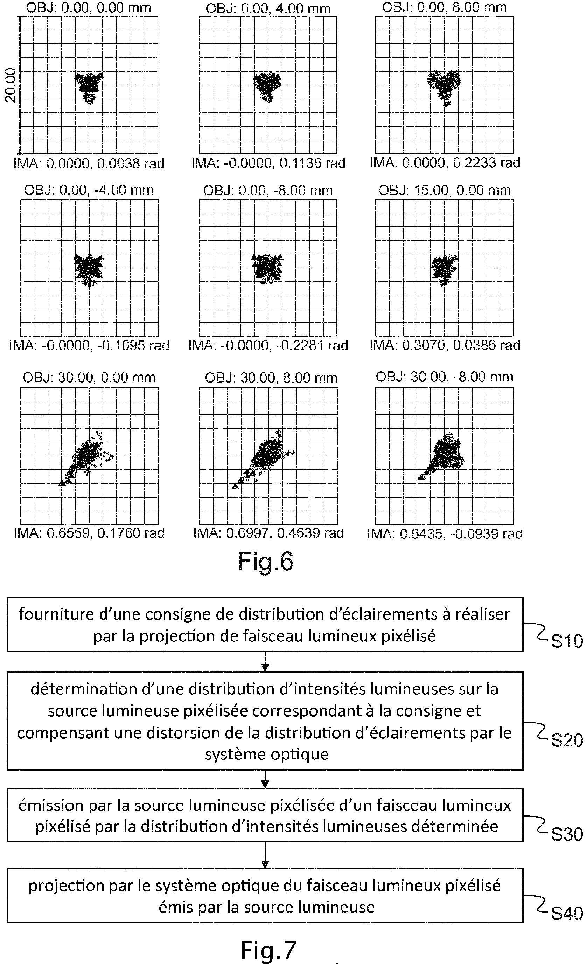

La FIG. 6 montre des simulations réalisées sur la base des spécifications ci-dessus. Pour chaque résultat, un lancé géométrique de rayons représente la performance du système optique. Comme on peut le constater, la résolution de l'image projetée est de l'ordre de 2 milli-rad = 0.1° pour un champ total de 0.45rad x 1.4rad = 25°x80°. Cela montre que le système optique proposé convient bien à la projection de faisceau lumineux pixélisé haute résolution.

Les résultats de la FIG. 6 permettent également d'observer que le système optique peut présenter des aberrations de distorsion (parfois de l'ordre de 30%). N'étant pas associée à un flou mais une déformation de l'image, cette aberration peut être compensée numériquement (même quand elle est par exemple de l'ordre de 30%) en modifiant la forme du motif à projeter émis par la source.

La FIG. 7 montre un exemple de procédé de projection de faisceau lumineux pixélisé par un dispositif lumineux tel que décrit ci-dessus qui permet de faire cette compensation numérique.

Le procédé comprend la fourniture S10 d'une consigne de distribution (i. e. une carte) d'éclairements à réaliser par la projection de faisceau lumineux pixélisé. En d'autres termes. On commande, par exemple à l'unité de contrôle de la source pixélisée, d'émettre un faisceau lumineux qui réalisera la distribution spatiale et/ou temporelle souhaitée sur la scène de valeurs d'éclairement.

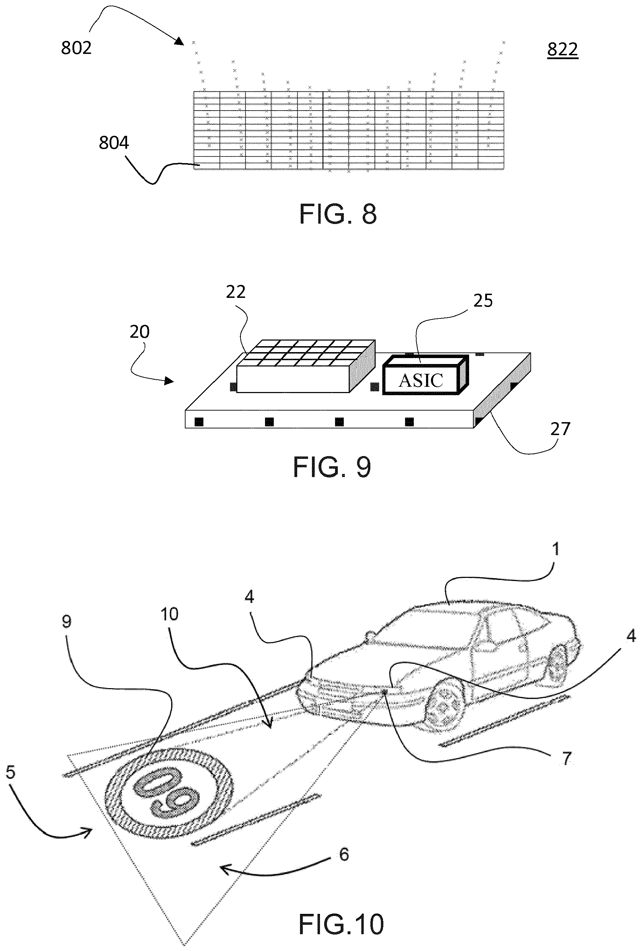

Le procédé comprend alors, par exemple par l'unité de contrôle, la détermination d'une distribution d'intensités lumineuses sur la source lumineuse pixélisée correspondant à la consigne et compensant une distorsion de la distribution d'éclairements par le système optique. En d'autres termes, l'unité de contrôle détermine quelle distribution d'intensités lumineuse spatiale et/ou temporelle (sur la source pixélisée) elle doit commander pour respecter la commande de distribution d'éclairements sur la scène. Mais au lieu de faire cela en calculant un inverse parfait de la projection d'un pixel lumineux, l'unité de contrôle tient compte de la distorsion du système optique dans le calcul. Notamment, pour établir la correspondance entre un pixel de la scène et un pixel de la source lumineuse, l'unité de contrôle intègre un ou des paramètres de distorsion. Par exemple, le procédé peut comprendre une utilisation de distorsion nominale du système optique et une production de déformation opposée. Cette compensation est illustrée sur la FIG. 8 qui montre la projection 804 d'une grille rectangulaire de pixels d'une scène sur une source lumineuse pixélisée 822 sans tenir compte de la distorsion. En tenant compte de la projection, l'unité de contrôle calcule qu'il faut commander la distribution d'intensité lumineuse 802 plutôt qu'une distribution correspondant à la projection 804.

L'unité de contrôle peut ensuite commander l'émission S30 par la source lumineuse pixélisée d'un faisceau lumineux pixélisé selon la distribution d'intensités lumineuses déterminée. Et ainsi, le système optique projette S40 le faisceau lumineux pixélisé émis par la source lumineuse, avec une distorsion qui était prévue dans les calculs et qui conduit donc à la bonne image.

La FIG. 9 montre un exemple schématique de module lumineux comprenant une source lumineuse pixélisée. Le dispositif lumineux peut comprendre un tel module lumineux. Le module lumineux 20 comprend la source électroluminescente monolithique 22 à haute densité, un circuit imprimé ou PCB 25 (de l'anglais « Printed Circuit Board ») qui supporte la source 22 et une unité de contrôle 27 qui commande les éléments électroluminescents de la source monolithique lumineuse 22. Tout autre support qu'un PCB peut être envisagé. L'unité de contrôle 27 peut être à tout autre endroit, même hors du module lumineux 20. L'unité de contrôle 27 est représentée sous la forme d'un ASIC, mais d'autres types d'unité de contrôle peuvent implémenter les fonctions du module lumineux.

La FIG. 10 montre un exemple schématique de projection d'un faisceau lumineux pixélisé par un véhicule, vu en perspective. Le véhicule automobile 1 est muni de deux projecteurs 4 pouvant l'un ou chacun comprendre au moins un dispositif lumineux 7 configuré pour projeter chacun un faisceau lumineux pixélisé 10 sur une scène 5 située en avant du véhicule 1. Le faisceau lumineux pixélisé 10 est dans l'exemple configuré pour former un d'éclairage global 6. L'éclairage global 6 peut être réglementaire. Le faisceau lumineux pixélisé 10 est également configuré pour former le motif 9. L'éclairement du motif 9 est également réglementaire. Dans l'exemple, il est plus élevé que l'éclairement de la première portion 9 autour de lui, ce qui permet de le rendre visible par contraste positif. Le motif 9 est dans l'exemple une image contenant une information textuelle et symbolique d'aide à la conduite. L'image 9 concerne en particulier la vitesse du véhicule. Le dispositif lumineux 7 peut alternativement projeter des informations de signalisation ou encore une information de guidage du conducteur du véhicule 1. Le dispositif 7 peut également d'autres dans des exemples projeter d'autres motifs.

## Revendications

1. Projecteur (4) de lumière de véhicule automobile comportant un dispositif lumineux (7) comportant une source lumineuse pixélisée (22, 322, 522, 822) et un système optique (300, 400) agencé pour projeter un faisceau lumineux pixélisé (10, 360, 460) émis par la source lumineuse pixelisée, **caractérisé en ce que** le système optique comprend :
- un premier miroir (M11) agencé pour collecter et réfléchir des rayons du faisceau lumineux pixélisé émis par la source lumineuse pixélisée,
- un deuxième miroir (M12) agencé pour réfléchir les rayons réfléchis par le premier miroir, et
- un troisième miroir (M13) agencé pour pour réfléchir les rayons réfléchis par le deuxième miroir de sorte à corriger les aberrations de champ.

2. Projecteur (4) selon la revendication 1, dans lequel le troisième miroir (M13) est également agencé pour collimater et projeter le faisceau lumineux pixélisé.

3. Projecteur (4) selon la revendication 1, dans lequel le dispositif lumineux comporte en outre un moyen optique agencé pour recevoir les rayons réfléchis par le troisième miroir et pour collimater et projeter le faisceau lumineux pixélisé.

4. Projecteur (4) selon la revendication 1, 2 ou 3, dans lequel le deuxième miroir (M12) est agencé sensiblement en position pupille.

5. Projecteur (4) selon l'une quelconque des revendications 1 à 4, dans lequel au moins un des miroirs (M11, M12, M13) est hors axe.

6. Projecteur (4) selon la revendication5, dans lequel au moins un des miroirs (M11, M12, M13) est de forme libre.

7. Projecteur (4) selon l'une quelconque des revendications 1 à 6, dans lequel le système optique (300) présente une architecture creuse.

8. Projecteur (4) selon l'une quelconque des revendications 1 à 7, dans lequel le système optique (400) présente une architecture monolithique.

9. Projecteur (4) selon la revendication 8, dans lequel le système optique comprend une face d'entrée (582) et une face de sortie (584).

10. Projecteur (4) selon la revendication 9, dans lequel la face d'entrée (582) et/ou la face de sortie (584) est agencée pour corriger les aberrations de champ.

11. Projecteur (4) selon l'une quelconque des revendications 1 à 10, dans lequel le système optique présente l'une au moins des caractéristiques suivantes :
- une hauteur de champ de projection supérieure à 10°,
- une largeur de champ de projection supérieure à 40°,
- un pouvoir de collection (f/D) inférieur à 3,
- un pouvoir de résolution plus faible que 0,5°, au moins dans une zone au centre du champ de projection, et/ou
- une plus grande dimension (H) inférieure à 300 millimètres.

12. Projecteur (4) selon l'une quelconque des revendications 1 à 11, comportant en outre une unité de contrôle (25) comportant un processeur associé à une mémoire ayant enregistré un programme d'ordinateur comprenant des instructions de code de programme pour l'exécution d'un procédé comprenant :
- la fourniture (S10) d'une consigne de distribution d'éclairements à réaliser par la projection de faisceau lumineux pixélisé ;
- la détermination (S20) d'une distribution d'intensités lumineuses sur la source lumineuse pixélisée correspondant à la consigne et compensant une distorsion de la distribution d'éclairements par le système optique ;
- l'émission (S30) par la source lumineuse pixélisée d'un faisceau lumineux pixélisé par la distribution d'intensités lumineuses déterminée ; et
- la projection (S40) par le système optique du faisceau lumineux pixélisé émis par la source lumineuse.

13. Procédé de projection de faisceau lumineux pixélisé par le dispositif lumineux d'un projecteur de lumière selon l'une quelconque des revendications 1 à 12, le procédé comprenant :
- la fourniture (S10) d'une consigne de distribution d'éclairements à réaliser par la projection de faisceau lumineux pixélisé ;
- la détermination d'une distribution d'intensités lumineuses sur la source lumineuse pixélisée correspondant à la consigne et compensant une distorsion de la distribution d'éclairements par le système optique ;
- l'émission par la source lumineuse pixélisée d'un faisceau lumineux pixélisé par la distribution d'intensités lumineuses déterminée ; et
- la projection par le système optique du faisceau lumineux pixélisé émis par la source lumineuse.

14. Programme d'ordinateur comprenant des instructions de code de programme pour l'exécution du procédé selon la revendication 13 lorsque ledit programme est exécuté par une unité de contrôle de projection d'un faisceau lumineux pixélisé par un dispositif lumineux de véhicule automobile comportant une source lumineuse pixélisée, l'unité de contrôle couplée à la source lumineuse pixélisée, et un système optique agencé pour projeter un faisceau lumineux pixélisé (10) émis par la source lumineuse pixélisée.

## Patentansprüche

1. Lichtprojektor (4) für ein Kraftfahrzeug, der eine Leuchtvorrichtung (7) beinhaltet, die eine gepixelte Lichtquelle (22, 322, 522, 822) und ein optisches System (300, 400), das dazu eingerichtet ist, ein von der gepixelten Lichtquelle ausgesendetes gepixeltes Lichtbündel (10, 360, 460) zu projizieren, beinhaltet, **dadurch gekennzeichnet, dass** das optische System umfasst:
- einen ersten Spiegel (M11), der dazu eingerichtet ist, Strahlen des von der gepixelten Lichtquelle ausgesendeten gepixelten Lichtbündels zu sammeln und zu reflektieren,
- einen zweiten Spiegel (M12), der dazu eingerichtet ist, die von dem ersten Spiegel reflektierten Strahlen zu reflektieren, und
- einen dritten Spiegel (M13), der dazu eingerichtet ist, die von dem zweiten Spiegel reflektierten Strahlen so zu reflektieren, dass die Feldaberrationen korrigiert werden.

2. Projektor (4) nach Anspruch 1, bei dem der dritte Spiegel (M13) auch dazu eingerichtet ist, das gepixelte Lichtbündel zu kollimieren und zu projizieren.

3. Projektor (4) nach Anspruch 1, bei dem die Leuchtvorrichtung ferner ein optisches Mittel umfasst, das dazu eingerichtet ist, die von dem dritten Spiegel reflektierten Strahlen zu empfangen und das gepixelte Lichtbündel zu kollimieren und zu projizieren.

4. Projektor (4) nach Anspruch 1, 2 oder 3, bei dem der zweite Spiegel (M12) im Wesentlichen in Pupillenposition eingerichtet ist.

5. Projektor (4) nach einem der Ansprüche 1 bis 4, bei dem mindestens einer der Spiegel (M11, M12, M13) außeraxial ist.

6. Projektor (4) nach Anspruch 5, bei dem mindestens einer der Spiegel (M11, M12, M13) frei geformt ist.

7. Projektor (4) nach einem der Ansprüche 1 bis 6, bei dem das optische System (300) eine hohle Architektur aufweist.

8. Projektor (4) nach einem der Ansprüche 1 bis 7, bei dem das optische System (400) eine monolithische Architektur aufweist.

9. Projektor (4) nach Anspruch 8, bei dem das optische System eine Eintrittsseite (582) und eine Austrittsseite (584) umfasst.

10. Projektor (4) nach Anspruch 9, bei dem die Eintrittsseite (582) und/oder die Austrittsseite (584) dazu eingerichtet ist, die Feldaberrationen zu korrigieren.

11. Projektor (4) nach einem der Ansprüche 1 bis 10, bei dem das optische System mindestens eines der folgenden Merkmale aufweist:
- eine Projektionsfeldhöhe von mehr als 10°,
- eine Projektionsfeldbreite von mehr als 40°,
- ein Sammelvermögen (f/D) von weniger als 3,
- ein geringeres Auflösungsvermögen als 0,5°, zumindest in einem Bereich im Zentrum des Projektionsfelds, und/oder
- ein größtes Maß (*H*) von weniger als 300 Millimeter.

12. Projektor (4) nach einem der Ansprüche 1 bis 11, der ferner eine Steuerungseinheit (25) beinhaltet, die einen Prozessor beinhaltet, der einem Speicher zugeordnet ist, der ein Computerprogramm gespeichert hat, das Programmcodeanweisungen zur Ausführung eines Verfahrens umfasst, das umfasst:
- das Bereitstellen (S10) eines Sollwerts einer Beleuchtungsstärkenverteilung, die durch die Projektion eines gepixelten Lichtbündels zu realisieren ist;
- das Bestimmen (S20) einer Lichtstärkenverteilung auf der gepixelten Lichtquelle, die dem Sollwert entspricht und eine Verzerrung der Beleuchtungsstärkenverteilung durch das optische System ausgleicht;
- das Aussenden (S30), durch die gepixelte Lichtquelle, eines Lichtbündels, das durch die bestimmte Lichtstärkenverteilung gepixelt wird; und
- das Projizieren (S40), durch das optische System, des von der Lichtquelle ausgesendeten gepixelten Lichtbündels.

13. Verfahren zur Projektion eines gepixelten Lichtbündels durch die Leuchtvorrichtung eines Lichtprojektors nach einem der Ansprüche 1 bis 12, wobei das Verfahren umfasst:
- das Bereitstellen (S10) eines Sollwerts einer Beleuchtungsstärkenverteilung, die durch die Projektion eines gepixelten Lichtbündels zu realisieren ist;
- das Bestimmen einer Lichtstärkenverteilung auf der gepixelten Lichtquelle, die dem Sollwert entspricht und eine Verzerrung der Beleuchtungsstärkenverteilung durch das optische System ausgleicht;
- das Aussenden, durch die gepixelte Lichtquelle, eines Lichtbündels, das durch die bestimmte Lichtstärkenverteilung gepixelt wird; und
- das Projizieren, durch das optische System, des von der Lichtquelle ausgesendeten gepixelten Lichtbündels.

14. Computerprogramm, das Programmcodeanweisungen umfasst zur Ausführung des Verfahrens nach Anspruch 13, wenn das Programm von einer Steuerungseinheit zur Steuerung der Projektion eines gepixelten Lichtbündels durch eine Leuchtvorrichtung eines Kraftfahrzeugs ausgeführt wird, die eine gepixelte Lichtquelle, die mit der gepixelten Lichtquelle gekoppelte Steuerungseinheit und ein optisches System, das dazu eingerichtet ist, ein von der gepixelten Lichtquelle ausgesendetes gepixeltes Lichtbündel (10) zu projizieren, beinhaltet.

## Claims

1. A motor-vehicle light projector (4) including a luminous device (7) including a pixelized light source (22, 322, 522, 822) and an optical system (300, 400) arranged to project a pixelized light beam (10, 360, 460) emitted by the pixelized light source, **characterized in that** the optical system comprises:
- a first mirror (M11) arranged to collect and reflect rays of the pixelized light beam emitted by the pixelized light source,
- a second mirror (M12) arranged to reflect the rays reflected by the first mirror, and
- a third mirror (M13) arranged to reflect the rays reflected by the second mirror so as to correct field aberrations.

2. The projector (4) as claimed in claim 1, wherein the third mirror (M13) is also arranged to collimate and project the pixelized light beam.

3. The projector (4) as claimed in claim 1, wherein the luminous device furthermore includes an optical means arranged to receive the rays reflected by the third mirror and to collimate and project the pixelized light beam.

4. The projector (4) as claimed in claim 1, 2 or 3, wherein the second mirror (M12) is arranged substantially in pupil position.

5. The projector (4) as claimed in any one of claims 1 to 4, wherein at least one of the mirrors (M11, M12, M13) is off-axis.

6. The projector (4) as claimed in claim 5, wherein at least one of the mirrors (M11, M12, M13) is a free-form mirror.

7. The projector (4) as claimed in any one of claims 1 to 6, wherein the optical system (300) has a hollow architecture.

8. The projector (4) as claimed in any one of claims 1 to 7, wherein the optical system (400) has a monolithic architecture.

9. The projector (4) as claimed in claim 8, wherein the optical system comprises an entrance face (582) and an exit face (584).

10. The projector (4) as claimed in claim 9, wherein the entrance face (582) and/or the exit face (584) is arranged to correct field aberrations.

11. The projector (4) as claimed in any one of claims 1 to 10, wherein the optical system has at least one of the following features:
- a projection-field height larger than 10°,
- a projection-field width larger than 40°,
- a collecting power (f/D) lower than 3,
- a resolution power lower than 0.5°, at least in a zone at the center of the projection field, and/or
- a largest dimension (H) smaller than 300 millimeters.

12. The projector (4) as claimed in any one of claims 1 to 11, furthermore including a control unit (25) including a processor associated with a memory storing a computer program comprising program-code instructions for the execution of a method comprising:
- provision (S10) of a setpoint for the distribution of light to be produced by the projection of the pixelized light beam;
- determination (S20) of a distribution of light intensities over the pixelized light source corresponding to the setpoint and compensating for a distortion of the distribution of light by the optical system;
- emission (S30), by the pixelized light source, of a pixelized light beam having the determined distribution of light intensities; and
- projection (S40), by the optical system, of the pixelized light beam emitted by the light source.

13. A method for projection of a pixelized light beam by a light projector as claimed in any one of claims 1 to 12, the method comprising:
- provision (S10) of a setpoint for the distribution of light to be produced by the projection of the pixelized light beam;
- determination of a distribution of light intensities over the pixelized light source corresponding to the setpoint and compensating for a distortion of the distribution of light by the optical system;
- emission, by the pixelized light source, of a pixelized light beam having the determined distribution of light intensities; and
- projection, by the optical system, of the pixelized light beam emitted by the light source.

14. A computer program comprising program-code instructions for the execution of the method as claimed in claim 13 when said program is executed by a control unit for controlling projection of a pixelized light beam by a luminous motor-vehicle device including a pixelized light source, the control unit coupled to the pixelized light source, and an optical system arranged to project a pixelized light beam (10) emitted by the pixelized light source.
